# EUROPÄISCHE PATENTSCHRIFT

(11) **EP 2 271 598 B1**
(45) Veröffentlichungstag und Bekanntmachung des Hinweises auf die Patenterteilung: **12.09.2018**
(21) Anmeldenummer: 09738109.9
(22) Anmeldetag: 27.04.2009
(51) Int. Cl.: C04B 41/81, C04B 33/13, C04B 38/02, C04B 41/00, C04B 41/45, C04B 111/00

(54) **FORMKÖRPER MIT PORÖSER OBERFLÄCHE UND VERFAHREN ZU SEINER HERSTELLUNG**
MOLDED BODY HAVING POROUS SURFACE AND METHOD FOR THE PRODUCTION THEREOF
CORPS MOULÉ AVEC SURFACE POREUSE ET SON PROCÉDÉ DE FABRICATION

(30) Priorität: 28.04.2008 DE 102008001402; 28.04.2008 US 125810 P
(43) Veröffentlichungstag der Anmeldung: 12.01.2011
(73) Patentinhaber: CeramTec GmbH, 73207 Plochingen (DE)
(72) Erfinder: HEINL, Roland, 95615 Marktredwitz (DE); LEY, Karl-Heinz, 95615 Marktredwitz (DE); SCHRÖTER, Peter, 95632 Wunsiedel (DE); SCHRICKER, Peter, 95615 Marktredwitz (DE)
(74) Vertreter: Fehrenbacher, Eckhard Anton
(86) Internationale Anmeldenummer: PCT/EP2009/055056
(87) Internationale Veröffentlichungsnummer: WO 2009/133065

(56) Entgegenhaltungen:
- EP-A- 0 353 669
- EP-A- 1 043 068
- WO-A-01/49440
- WO-A-2009/019520
- WO-A1-01/72664
- DE-A1- 2 135 620
- US-A- 3 145 183

## Beschreibung

Die Erfindung betrifft einen keramischen Formkörper mit poröser Oberfläche und ein Verfahren zu seiner Herstellung.

Formkörper mit einer porösen Oberfläche eignen sich insbesondere als Träger für Wirkstoffe, um diese zu immobilisieren.

Durch das Aufbringen der Wirkstoffe auf solche Träger können auch die mechanischen Eigenschaften (z. B. Festigkeit) der Wirkstoffe verbessert werden.

Als vorgenannte Wirkstoffe kommen u. a. solche Stoffe in Betracht, die chemische Reaktionen schneller oder langsamer machen, ohne bei der chemischen Reaktion selbst verbraucht zu werden. Sie werden auch als Beschleuniger bzw. als Verzögerer bezeichnet. Ein Beschleuniger (Verzögerer) setzt die für eine chemische Reaktion erforderliche Aktivierungsenergie herab (herauf), so dass eine chemische Reaktion bei gegebener Temperatur schneller (langsamer) verläuft. In der chemischen Industrie finden hauptsächlich Beschleuniger Verwendung. Viele chemische Reaktionen sind überhaupt erst durch die Mitverwendung eines Beschleunigers bzw. Verzögerers möglich, weil ohne Beschleuniger die chemische Reaktion extrem langsam ablaufen würde, oder weil bei der zur Reaktion ohne Verzögerer notwendigen Temperatur das thermodynamische Gleichgewicht auf der Seite der Ausgangsstoffe liegt. Da Beschleuniger und Verzögerer aus der Gesamtreaktion im Wesentlichen unverändert hervorgehen, können sie mehrere Reaktionszyklen durchlaufen, während die Ausgangsstoffe abgebaut und die Produkte aufgebaut werden.

Als Werkstoffe für Träger-Formkörper sind wegen ihres inerten Verhaltens gegenüber den meisten Wirkstoffen und Reaktanden insbesondere Keramikwerkstoffe geeignet.

Im Fall von Multielementoxidbeschleunigern haben sich u. a. Träger-Formkörper aus Silikatkeramik bewährt, insbesondere solche auf der Basis von Magnesium-Silikat.

Enthalten letztere als Hauptausgangsstoff Speckstein, spricht man auch von Steatit (ein erfindungsgemäß günstiger Steatit ist Steatit C 220).

Die Multielementoxidbeschleuniger (z. B. Multimetalloxidbeschleuniger) werden in typischer Weise schichtförmig auf den Träger-Formkörper aufgebracht. Die so immobilisierten Beschleuniger können dann z. B. zur Beschleunigung von Reaktionen fluider Stoffgemische eingesetzt werden, von denen sie durchströmt werden.

Selbstverständlich kann der Träger-Formkörper aber auch mit dem Multielementoxidbeschleuniger getränkt (und nachfolgend getrocknet) werden, um diesen zu immobilisieren. Anstelle von Multielementoxidbeschleunigern können auch andere Wirkstoffe wie z. B. Enzyme als Beschleuniger auf Träger-Formkörper immobilisiert werden.

WO01/49440 A1 zeigt eine dünne poröse Schicht mit definierter, offener Porosität und hoher Festigkeit sowie ein Verfahren zur Herstellung dieser. Die Schicht weist einen Porendurchmesser von 0,01-50 µm und eine Zugfestigkeit von 5-500N/mm² auf.

DE 2135620 beschreibt ein Verfahren zur Aufbringung einer porösen Katalysatorschicht aus Granulat oder Splittkorn auf einen dichten oder sehr schwach porösen Tragkörper. US 3,143,183 zeigt ebenfalls ein Verfahren zur Aufbringung einer Katalysatorschicht auf einen Tragkörper.

Aus WO01/72664 gehen Formkörper aus einem gesinterten anorganischen Werkstoff bestehend aus einem Grundkörper, einem Substrat und einer porösen Schicht auf dem Substrat sowie ein Verfahren zur Herstellung der Formkörper hervor. Um ein nachträgliches Auftragen der Schicht auf das bereits gesinterte Substrat zu vermeiden, wird auf die Oberfläche des als Grünkörper geformten Grundkörpers eine Schicht, die einen porenbildenden Stoff enthält, aufgetragen und der so beschichtete Grundkörper anschließend der erforderlichen Wärmebehandlung unterzogen.

Nachteilig an den bekannten Träger-Formkörpern aus keramischem Werkstoff ist, dass die Haftfähigkeit von Wirkstoffen auf ihrer Oberfläche nicht in vollem Umfang zu befriedigen vermag.

Der Erfindung liegt deshalb die Aufgabe zugrunde, einen keramische Formkörper mit verbesserter Haftfähigkeit für Wirkstoffe (insbesondere für Multielementoxidbeschleuniger) zur Verfügung zu stellen und dadurch letztlich auch die Wirksamkeit (d. h., Selektivität und Aktivität) der auf ihm als Träger aufgebrachten Wirkstoffe zu verbessern.

Die Lösung der Aufgabe erfolgt durch einen keramischen Formkörper mit einer porösen Oberfläche, der dadurch gekennzeichnet ist, dass der keramische Formkörper aus einem keramischen Form-Grundkörper und einer auf diesen aufgebrachten porösen keramischen Schale besteht, wobei die poröse keramische Schale mit dem keramischen Grundkörper gemeinsam gesintert ist und der keramische Werkstoff des Grundkörpers sowie der keramische Werkstoff der porösen keramischen Schale ausgewählt ist aus der Gruppe umfassend Silikatkeramiken und Metalloxidkeramiken und die beiden keramischen Werkstoffe sowohl identisch als auch voneinander verschieden sein können. Als Beispiele für solche Silikatkeramiken seien genannt Steatit (Hauptbestandteil = Magnesium-Silikat), Zirkonsilikat und Aluminiumsilikat (z. B. Mullit). Als Beispiele für solche Metalloxidkeramiken seien Aluminiumoxid, Magnesiumoxid und Zirkonoxid genannt.

Vorteilhafte Ausgestaltungen der Erfindung werden in den abhängigen Ansprüchen beansprucht.

Grundlage der Aufgabenlösung ist der Sachverhalt, dass die Haftfähigkeit eines Wirkstoffs (eines Beschleunigers oder eines Verzögerers) auf einem Träger-Formkörper wesentlich verbessert ist, wenn dessen Oberfläche porös und vorzugsweise zusätzlich rau ist. Ein Formkörper mit einer solchen Oberflächenbeschaffenheit kann erfindungsgemäß dadurch geschaffen werden, dass auf einen keramischen Formgrundkörper eine poröse Schale aus einem keramischen Werkstoff aufgebracht ist.

Die poröse Schale kann dabei grundsätzlich aus einem anderen keramischen Werkstoff als der Formgrundkörper bestehen. Vorteilhaft ist es allerdings, wenn der keramische Werkstoff des Formgrundkörpers und der keramische Werkstoff der porösen Schale dieselben sind. Dadurch besteht Übereinstimmung in den chemischen und physikalischen Eigenschaften von Grundkörper und Schale. Beispielsweise weisen beide denselben thermischen Ausdehnungskoeffizienten auf. Dadurch wird eine unterschiedliche thermisch Ausdehnung von Grundkörper und Schale vermieden, welche z. B. gegebenenfalls ein Abplatzen der Schale zur Folge haben kann.

Die Auswahl des keramischen Werkstoffs erfolgt in Abhängigkeit vom zu immobiliserenden Wirkstoff sowie der in ihrer Geschwindigkeit zu beeinflussenden chemischen Reaktion.

Im Fall von Multielementoxiden als Wirkstoff und Partialoxidationen organischer Verbindungen als zu beschleunigende Reaktionen, haben sich als keramischer Werkstoff für die zu verwendenden Träger-Formkörper solche als vorteilhaft erwiesen, die sich durch einen Gesamtgehalt an Alkalimetallen von höchstens 2 Gew.-%, vorzugsweise von höchstens 1 Gew.-%, einen Magnesium nicht umfassenden Erdalkaligesamtgehalt von nicht mehr als 2 Gew.-% (dabei insbesondere einen Barium-Gehalt von unter 0,5 Gew.-%, vorzugsweise von unter 0,05 Gew.-%) und einen geringen Eisengehalt von höchstens 1,5 Gew.-%, vorzugsweise von weniger als 1 Gew.-% auszeichnen. Vorgenannte geringe Gehalte begünstigen in der Regel Aktivität und Selektivität des Multielementoxidbeschleunigers.

Die Aufbringung der porösen Schale auf den Formgrundkörper kann anwendungstechnisch zweckmäßig so erfolgen, dass man in einer rotierenden Beschichtungstrommel Formgrundkörpervorläufer mit einem aus einem keramischen Masseschlicker unter Zugabe von Zusatzstoffen hergestellten Beschichtungsschlicker besprüht, nachfolgend trocknet und sintert.

Die Zusatzstoffe umfassen insbesondere ein Porosierungsmittel, das während des Sintervorgangs ausgetrieben wird und in der aufgebrachten Schale im gewünschten Umfang Poren hinterlässt. Die Porosität und mit dieser auch die Rauheit der keramischen Schale kann über die zugesetzte Menge und die Partikelgröße des zugegebenen Porosierungsmittels eingestellt werden. Bevorzugt werden Porosierungsmittel, die sich rückstandsfrei austreiben lassen, damit die Poren vollständig zum Auftragen und zur Verankerung der zu immobilisierenden Wirkstoffe zur Verfügung stehen. Beispiele für Porosierungsmittel bilden Kartoffelstärke, gemahlene Nussschale, Maisstärke und Kunststoffgranulate (z. B. aus Polyethylen).

Um eine besonders raue und damit einhergehend große Oberfläche der auf den Formgrundkörper aufgebrachten porösen Schale zu erhalten, ist es vorteilhaft, wenn das verwendete Porosierungsmittel eine offenporige Struktur der Schale bewirkt. Eine offenporige Struktur der keramischen Schale wirkt wie ein Schwamm. Es entsteht eine große Oberfläche und dadurch ein großes Flächenangebot zum Aufbringen des beschleunigend oder verlangsamend wirkenden Wirkstoffs (z. B. Multielementoxids).

Die offenporige Struktur der Schale des Träger-Formkörpers bedingt eine Kapillarwirkung, die sich sowohl beim Aufbringen der Wirkstoffe als auch bei deren Einwirkung auf reaktive Fluide (z. B. Reaktionsgasgemische oder Flüssigkeiten) vorteilhaft auswirkt. Durch die Kapillarwirkung werden in ihrer Reaktionsgeschwindigkeit zu beeinflussende reaktive Fluide von der Wirkstoffbeschichtung wie von einem Schwamm angesaugt.
Die porenbedingte Erhöhung der später wirksamen Wirkstoffoberfläche der auf den Träger-Formkörper aufgebrachten Wirkstoffbeschichtung bedingt in der Regel auch eine erhöhte Aktivität der Wirkstoffschicht.
Die Dicke der porösen keramischen Schale der erfindungsgemäßen Träger-Formkörper liegt im Bereich von 0,1 mm bis 0,3 mm. Der Anteil der Poren pro Volumeneinheit der porösen keramischen Schale beträgt in der Regel 20 bis 65 Vol.-%, vorzugsweise 30 bis 40 Vol.-%, z. B. 35 Vol.-%.
Der zahlenmittlere Durchmesser d50 der Poren der keramischen Schale beträgt 4 µm bis 6 µm. Die poröse keramische Schale der erfindungsgemäßen keramischen Träger-Formkörper kann ihre Aufgabe, die Haftung der aktiven Wirkstoffe zu verbessern, nicht erfüllen, wenn sie zu dünn ist. Andererseits setzen zu dicke poröse Schalen oder zu hohe Porositäten die mechanische Beständigkeit der porösen Schicht herab und erhöhen so die Gefahr einer Absplitterung der porösen Schale.
Der die poröse keramische Schale tragende keramische Formgrundkörper sollte dagegen möglichst von hoher mechanischer Festigkeit sein. Deshalb weist er vorteilhaft eine dichte Struktur auf. In der Regel ist der Formgrundkörper porenfrei oder hat allenfalls einen geringen Porenanteil, der kleiner oder gleich 10 Vol.-% ist. Die übrigen Zusatzstoffe zur Herstellung des Beschichtungsschlickers sind in erster Linie Hilfsmittel zur Verbesserung der Sprüheigenschaften des Schlickers, zur Erhöhung der Haftfähigkeit und Festigkeit der aufgebrachten Schicht, zur Stabilisierung /Konservierung des Schlickers und zur Verhinderung von Schaumbildung.

Die Herstellung eines erfindungsgemäßen keramischen Träger-Formkörpers mit poröser Schale soll im Folgenden näher beschrieben werden.

Zunächst erfolgt in an sich bekannter Weise die Herstellung eines grünen Formgrundkörpers.

Aus einem zu dem ins Auge gefassten keramischen Werkstoff führenden wässrigen Masseschlicker, der das zur Ausbildung des keramischen Werkstoffes in an sich bekannter Weise erforderliche feinteilige Gemisch der mineralischen Ausgangsrohstoffe (keramischen Rohstoffe) sowie in der Regel Zusatzstoffe wie z. B. Verflüssiger (z. B. TARGON® 94 (ein Polycarboxylat)), Entschäumer (z. B. Contraspum® (höherer Alkohol) und Bindemittel (z. B. Cellulose) enthält, wird durch Sprühtrocknung in einem Sprühturm ein pressfähiges Granulat gewonnen (man bezeichnet den wässrigen Masseschlicker auch als Sprühschlicker). Dieses Sprühkorn wird bevorzugt durch Trockenpressen zu einem grünen Formgrundkörper gepresst, dessen Geometrie sich nach der späteren ins Auge gefassten Verwendung richtet. Häufig verwendete Geometrien sind Kugeln und Ringe (deren Längstausdehnung beträgt typisch 2 bis 14 mm). Die mittlere Korngröße (d50, Masse) im wässrigen Masseschlicker beträgt 0,5 µm bis 20 µm (der entsprechende mittlere Korndurchmesser d50, Masse im wässrigen Beschichtungsschlicker beträgt anwendungstechnisch zweckmäßig 0,5 bis 50 µm).
Nach dem Formpressen erfolgt ein Grundglühen der grünen Formgrundkörper bei Temperaturen, die wesentlich unter den zur Herstellung des ins Auge gefassten keramischen Werkstoffs (z. B. Steatit) erforderlichen Sintertemperaturen liegen. Häufig (z. B. im Fall des ins Auge gefassten Werkstoffs Steatit C220) erfolgt das Vorglühen bei 600 bis 1000 °C, vielfach bei 700 bis 800 °C. Es entsteht so ein Formgrundkörpervorläufer, der die für die weitere Handhabung bei der Aufbringung des Beschichtungsschlickers erforderliche mechanische Stabilität aufweist.
Der vorgeglühte, aber insbesondere in seinem Kern noch nicht dicht und vollständig gesinterte Formgrundkörpervorläufer weist eine für den nachfolgenden Beschichtungsvorgang noch ausreichende (günstige) Saugfähigkeit auf, die sich beim Aufsprühen des Beschichtungsschlickers vorteilhaft auswirkt.
Die Beschichtung des Formgrundkörpervorläufers erfolgt, wie bereits erwähnt, mit einem wässrigen Beschichtungsschlicker, dessen mineralische Rohstoffzusammensetzung erfindungsgemäß vorteilhaft jener des zur Herstellung des Formgrundkörpervorläufers verwendeten wässrigen Masseschlickers (Sprühschlickers) entspricht. Wenn für die poröse Schale dieselbe mineralisch Korngröße wie für den Formgrundkörper ins Auge gefasst ist, wird man zur Herstellung des wässrigen Beschichtungsschlickers anwendungstechnisch zweckmäßig vom zur Herstellung des Formgrundkörpervorläufers verwendeten wässrigen Masseschlicker ausgehen.

Bei einer anderen Korngröße muss der Schlicker zur Erzeugung der porösen Schale gesondert angerührt werden. Das Aufbringen des Beschichtungsschlickers auf die Oberfläche des Formgrundkörpervorläufers kann prinzipiell nach unterschiedlichen Verfahren erfolgen, je nach beabsichtigter Dicke der resultierenden porösen Schale. Die dazu erforderliche Viskosität wird durch Zugabe entsprechender Zusatzstoffe eingestellt. Beispielsweise kann das Beschichten durch Tauchen, Aufsprühen oder in einer Beschichtungstrommel erfolgen.

Dem wässrigen Beschichtungsschlicker werden vor dem Auftragen auf den Formgrundkörpervorläufer die bereits erwähnten Porosierungsmittel beigemischt. Deren Korngröße richtet sich vor allem nach der Größe der gewünschten Poren. Bei Porenbildnern, die sich bei ihrer Zersetzung zusätzlich aufblähen, muss die Volumenzunahme der Poren gegenüber der Korngröße des Porosierungsmittels berücksichtigt werden. Gleichzeitig muss die Schwindung der resultierenden Keramik bei ihrer Abkühlung nach dem Sintern berücksichtigt werden, durch die die Porengröße wieder vermindert wird.

Nach dem Beschichten des Formgrundkörpervorläufers erfolgt (nachdem gegebenenfalls Bruch durch Sieben entfernt wurde) die Fertigstellung des Träger-Formkörpers durch ein auf den resultierenden Keramikwerkstoff abgestimmtes Sinterverfahren in einem Sinterofen, wobei die anzuwendenden Temperaturen, in Abhängigkeit vom anvisierten keramischen Werkstoff, normalerweise im Bereich von 1250 °C bis 1400 °C liegen.

Im Fall von Steatit C220 wird die Sintertemperatur typisch 1300 bis 1350 °C betragen.

Die Sinterzeiten liegen im Bereich von 0,5 h bis 8 h. Niedrige Temperaturen bedingen längere Haltezeiten, um die Diffusion, die als Sintermechanismus erforderlich ist, zu gewährleisten.
Beim Sintervorgang und der vorübergehenden Entbinderung erfolgt die Temperatursteuerung dergestalt, dass die Bindemittel und Porosierungsmittel rückstandsfrei aus dem sich bildenden Keramikwerkstoff entweichen, ohne dass dabei durch sich entwickelnde Zersetzungsprodukte, insbesondere Gase, eine Beeinflussung des Formkörpers, beispielsweise ein Aufblähen, erfolgt. Im Ergebnis wird ein keramischer Träger-Formkörper erhalten, der aus einem keramischen Formgrundkörper mit einer auf diesem aufgebrachten keramischen Schale besteht.
Wie beschrieben erhältliche Träger-Formkörper (insbesondere jene aus Steatit C220) eignen sich insbesondere zum Immobilisieren von Multielementoxidwirkstoffen.
Vor allem eignen sie sich für die in den Schriften EP-A 1029591, US-A 6,344,568, US-A 6,780,816, US-A 6,638,890, EP-A 1106246, DE-A 3826220, DE-A 4442346, DE-A 2135620, US-A 6,288,273, EP-A 0966324, EP-A 1670575, US-A 2007/41795, WO 2005/030388, DE-A 10360058 sowie DE-A 10360057 für keramische Träger-Formkörper offenbarten Verwendungszwecke, insbesondere die jeweils beispielhaft ausgeführten.
Zur Verdeutlichung des Verfahrensablaufs bei der Herstellung erfindungsgemäßer keramischer Träger-Formkörper ist dieser Schrift ein entsprechendes Ablaufdiagramm beigefügt.
Anhand der nachfolgenden Ausführungsbeispiele 1 bis 5 wird die Erfindung, ohne sie dabei in irgendeiner Weise zu beschränken, nochmals erläutert. Die beim Glühen verbleibenden chemischen Zusammensetzungen der dabei verwendeten mineralischen Rohstoffe (jeweils angegeben in Masse-% bezogen auf die jeweilige Gesamtmasse im nicht geglühten Zustand) zeigt die Tabelle 1 dieser Schrift. Der in der Tabelle 1 angegebene Glühverlust wird überwiegend von Wasserdampf gebildet.

**Tabelle 1**

| | **Al₂O₃** | **SiO₂** | **Fe₂O₃** | **TiO₂** | **CaO** | **MgO** | **Na₂O** | **K₂O** | **Glüh verlust** |
|---|---|---|---|---|---|---|---|---|---|
| **Ton 1** | 33,6 | 47,9 | 1,8 | 2,2 | 0,7 | 0,1 | <0,1 | <0,1 | 13,5 |
| **Ton 2** | 25,3 | 60,9 | 1,4 | 1,3 | 0,3 | 0,4 | 0,1 | 2,6 | 7,7 |
| **Kaolin 1** | 37,4 | 47 | 0,8 | 0,2 | 0,3 | 0,1 | 0,1 | 0,8 | 13,3 |
| **Bentonit 1** | 19,4 | 60,3 | 5,6 | 0,4 | 1,8 | 4,3 | 0,2 | 1,5 | 5,1 |
| **Speckstein 1** | 0,8 | 61,7 | 0,9 | <0,1 | 0,1 | 31,4 | <0,1 | <0,1 | 5,1 |
| **Talkum 1** | 1 | 62 | 1 | <0,1 | 0,1 | 30 | 0,1 | <0,1 | 5,8 |
| **Feldspat 1** | 17,6 | 66,8 | <0,1 | 0,1 | <0,1 | <0,1 | 0,6 | 14,6 | 0,2 |
| **Feldspat 2** | 17,4 | 71,7 | 0,2 | <0,1 | 1,2 | 0,1 | 7,3 | 1,8 | 0,2 |
| **Mg(OH)₂** | - | - | - | - | - | 69 | - | - | 30,8 |

### Beispiele 1 bis 5:

Die Zusammensetzungen der im Rahmen der Herstellung der jeweiligen Formgrundkörpergrünlinge verwendeten wässrigen Masseschlicker (ohne Berücksichtigung von zugegebenen organischen Zusatzstoffen) zeigt die Tabelle 2 (alle Angaben in Masse-% bezogen auf die Gesamtmasse).

**Tabelle 2**

| | **Beispiel 1** | **Beispiel 2** | **Beispiel 3** | **Beispiel 4** | **Beispiel 5** |
|---|---|---|---|---|---|
| **Ton 1** | - | - | 2,6 | - | 2,8 |
| **Ton 2** | 2,8 | - | 2,2 | 5 | - |
| **Kaolin 1** | 2,8 | 5,7 | - | - | 3,7 |
| **Bentonit 1** | - | 0,5 | 0,5 | - | - |
| **Speckstein 1** | - | 58,7 | 58,3 | 60,3 | - |
| **Talkum 1** | 58,7 | - | - | - | 60,5 |
| **Feldspat 1** | 1,7 | - | 2,7 | 2,7 | 3,2 |
| **Feldspat 2** | 2,4 | 3,6 | - | - | - |
| **Ma(OH)₂** | 1 | - | 1,4 | 1 | - |
| **Wasser** | 30,6 | 31,5 | 32,3 | 31 | 29,8 |

Das Vermahlen zum wässrigen Masseschlicker erfolgte in allen Ausführungsbeispielen mittels einer Kugelmühle. Die Mahlzeit wurde dabei jeweils so bemessen, dass jeweils eine mittlere Korngröße (d50, Masse) von 12 µm entstand.

Als Zusatzstoffe wurden den wässrigen Masseschlickern aus Tabelle 2 (bezogen auf ihre Ausgangsmasse) hinzugegeben: 0,3 Masse-% TARGON® 94 (Verflüssiger auf Basis eines Polycarboxylats), 0,1 Masse-% Contraspum® (Entschäumer auf der Basis höherer Alkohole) und 0,1 Masse-% Cellulose (als Bindemittel).

Bei Bedarf kann zusätzlich Konservierungsmittel (z. B. Dilurit®) und gegebenenfalls Stellmittel zur Verhinderung einer Sedimentation der mineralischen Partikel zugegeben werden.

Der wässrige Masseschlicker (bzw. Sprühschlicker) wurde jeweils sprühgetrocknet und das dabei mit einer mittleren Korngröße d50, Masse von 0,3 mm resultierende Sprühkorn in einer Presse zu einem ringförmigen Körper trocken gepresst. Der dabei resultierende grüne Formgrundkörper hatte eine ringförmige Geometrie A (Außendurchmesser = 8 mm) x I (Innendurchmesser = 4,7 mm) x H (Höhe = 3,5 mm). Alternativ kann auch eine Ringgeometrie von A (7 mm) x I (4 mm) x H (3 mm) gewählt werden.

Die erhaltenen grünen Formgrundkörper wurden unter Luft in einem Sinterofen wie folgt vorgeglüht: innerhalb von 25 Minuten von Raumtemperatur auf 760 °C Aufheizen; die 760 °C während 10 Minuten beibehalten und nachfolgend innerhalb von 15 Minuten auf Raumtemperatur abkühlen.

Durch das beschriebene Vorglühen erhält der dabei resultierende Formgrundkörpervorläufer die zum Aufbringen des wässrigen Beschichtungsschlickers erforderliche Festigkeit. Er ist jedoch noch nicht durchgesintert. D. h., es erfolgt bei vorgenannten Temperaturen noch kein Dichtsintern. Aber alle organischen Bestandteile, die dem wässrigen Masseschlicker als Zusatzstoffe zugegeben wurden, zersetzen sich und werden aus dem Werkstoff ausgetrieben.

Dadurch resultiert ein Formgrundkörpervorläufer, der für den wässrigen Beschichtungsschlicker eine angemessene Aufnahmefähigkeit aufweist.

Der für die Beschichtung der wie vorstehend beschrieben erhaltenen Formgrundkörpervorläufer verwendete wässrige Beschichtungsschlicker wird jeweils ausgehend von dem zur Herstellung des Formgrundkörpervorläufers verwendeten jeweiligen wässrigen Masseschlicker (aus diesem Grund wird von selbigem eine entsprechende Teilmenge abgezweigt) hergestellt (der noch keine Zusatzstoffe enthält).

Zu diesem Zweck wurden den wässrigen Masseschlickern der Beispiele 1 und 5, bezogen auf die Masse ihres anorganischen Feststoffgehalts, 15 Masse-% Polyethylen (= Porosierungsmittel; mittlere Korngröße d50,Masse = 30 µm) und 4 Masse-% Polyvinylalkohol (Mowiol® 4/88 = weiteres Bindemittel) zugegeben.

Die Mowiolzugabe erfolgte als 17 Gew.-%ige wässrige Lösung, die 0,2 Masse-% Contraspum® conc. zugesetzt enthielt. Zusätzlich wurden noch 5 bis 10 Masse-% (bezogen auf den Masseschlicker) an Wasser als Stellmittel zugegeben. Ein weiteres Additiv bildeten 0,1 Masse % Dilurit (bezogen auf den Masseschlicker). Dabei wurden die wässrigen Beschichtungsschlicker 1 und 5 erhalten.

Zum selben Zweck wurde den wässrigen Masseschlickern der Beispiele 2, 3 und 4, bezogen auf die Masse ihres anorganischen Feststoffgehalts, 20 Masse-% Maisstärke der Fa. Cerestar vom Typ RG 03453 (= Porosierungsmittel; mittlere Korngröße d50,Masse = 15 µm) und 5 Masse-% Polyvinylalkohol (Mowiol® 4/88 = weiteres Bindemittel) zugegeben. Die Mowiolzugabe erfolgte als 17 Gew.-%ige wässrige Lösung, die 0,2 Masse-% Contraspum® conc. zugesetzt enthielt. Zusätzlich wurden noch 5 bis 10 Masse-% (bezogen auf den Masseschlicker) an Wasser als Stellmittel zugegeben. Ein weiteres Additiv bildeten 0,1 Masse % Dilurit (bezogen auf den Masseschlicker). Dabei wurden die wässrigen Beschichtungsschlicker 2, 3 und 4 erhalten.

Das Auftragen der so jeweils erhaltenen wässrigen Beschichtungsschlicker auf den jeweils dieselbe Beispielnummer aufweisenden Formgrundkörpervorläufer (über ein Rollensieb der Maschenweite 6 mm x 6 mm bei 1,5 mm Drahtstärke, wurden von selbigen vorab ihrer Beschichtung Staub und Bruchstücke abgetrennt) erfolgte in einer Beschichtungstrommel (Schrägteller Eirich, 50 U/min).

Diese wurde mit ca. 32 kg der ringförmigen Formgrundkörpervorläufer befüllt und während der Rotation mit einer fest angebrachten Sprüheinrichtung innerhalb von 7 min. jeweils 2 Liter des zugehörigen wässrigen Beschichtungsschlickers eingedüst (das Litergewicht des jeweiligen wässrigen Beschichtungsschlickers betrug 1340 bis 1360 g/l; die Auslaufzeit betrug 20 bis 25 Sekunden).

Danach wurde die Trommel entleert und die beschichteten Ringe zum Entfernen von Staub und Bruchstücken über ein weiteres Rollensieb (Maschenweite 5,7 mm x 5,7 mm, Drahtstärke 1,5 mm) geführt. Die Schichtdicke im getrockneten Zustand betrug ca. 0,1 mm.

Abschließend wurden die beschichteten Formgrundkörpervorläufer jeweils in einem Tunnelofen an Luft gesintert.

Die Sinterung erfolgte mit einer Aufheizrate von 80 °C/h bis zum Erreichen einer Temperatur von 1330 °C. Diese Temperatur wurde 1,5 Stunden gehalten und abschließend mit einer Rate von 150 °C/h abgekühlt. Erhalten wurden so ringförmige keramische Träger-Formgrundkörper mit poröser keramischer Schale.

Die Porosität der resultierenden Schalen lag bei etwa 35 Vol.-%, der zahlenmittlere Porenkanaldurchmesser d50 betrug ca. 5 µm, gemessen mittels Quecksilberdruckporosimetrie. Die ausgebildeten Porenstrukturen ähnelten in ihrer Form einer Flasche. Der Porenkanaldurchmesser entsprach dem Durchmesser des Flaschenhalses, die Körnung des Porosierungsmittels entsprach dem Durchmesser des Flachenkörpers.

Solche hintergriffigen Strukturen sind für Verzahnungseffekte vorteilhaft. Die Poren lagen offen vor, wodurch die poröse Schale eine schwammartige Struktur aufwies. Eine solche Porenstruktur bietet optimale Bedingungen zum Aufbringen der in den Schriften EP-A 1029591, US-A 6,344,568, US-A 6,780,816, US-A 6,638,890, EP-A 1106246, DE-A 03826220, DE-A 4442346, DE-A 2135620, US-A 6,288,273, EP-A 0966324, EP-A 1670575, US-A 2007/41795, WO 2005/030388, DE-A 10360058, und DE-A 10360057 offenbarten Multielementoxidwirkstoffe und bildet die Voraussetzung dafür, dass im Betrieb der mittels der solchermaßen immobilisierten Multielementoxide beschleunigten Partialoxidationen der vorgenannten Schriften kein Abplatzen des aufgebrachten Multielementoxidwirkstoffs mehr erfolgt.

Die Ringgeometrie A (7mm) x I (4 mm) x H (3 mm) aller Beispiele 1 bis 5 eignet sich insbesondere als porös beschichteter Träger-Formgrundkörper zur Verwendung in allen Ausführungsbeispiele der Schriften DE-A 04442346, DE-A 10360058 und DE-A 10360057, sowie zur Realisierung der gesamten in diesen Schriften gegebenen Lehre. Dies trifft so auch für die in der vorliegenden Schrift beanspruchten keramischen Formkörper zu. Es werden verbesserte Selektivitäten der Zielproduktbildung erhalten. Dies gilt insbesondere für die Partialoxidation von Propenal zu Propensäure (an Mo und V enthaltenden Multielementoxidwirkstoffen tragenden Träger-Formkörpern).

### Vergleichsbeispiel 1

Der ringförmige grüne Formgrundkörper aus Beispiel 4 wurde als solcher in der Geometrie A (7 mm) x I (4 mm) x H (3 mm) in einem Tunnelofen mit einer Aufheizrate von 80 °C auf eine Temperatur von 1330 °C erwärmt und 1,5 h bei dieser Temperatur gehalten sowie nachfolgend mit einer Kühlrate von 150°C/h abgekühlt. Es entstand ein dichter Ring, der als solcher in den Ausführungsbeispielen der DE-A 04442346 als Träger-Formkörper eingesetzt wurde.

Bei Verwendung des so immobilisierten Multielementoxids als Beschleuniger für die in der DE-A 04442346 beispielhaft ausgeführte Partialoxidation, kam es zu Haftungsproblemen der Multielementoxidmasse auf dem Träger-Formkörper und in der Folge zu Abplatzungen und daraus resultierend zu örtlichen Anreicherungen, die einen erhöhten Druckverlust bedingten.

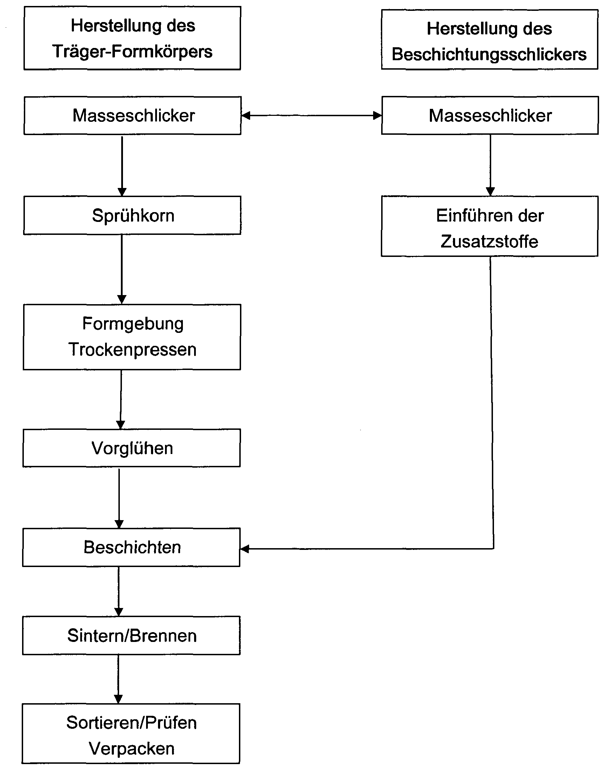

## Patentansprüche

1. Keramischer Formkörper mit einer porösen Oberfläche, **dadurch gekennzeichnet, dass** der keramische Formkörper aus einem keramischen Formgrundkörper und einer auf diesen aufgebrachten porösen keramischen Schale besteht, wobei die poröse keramische Schale mit dem keramischen Grundkörper gemeinsam gesintert ist und der keramische Werkstoff des Grundkörpers sowie der keramische Werkstoff der porösen keramischen Schale ausgewählt ist aus der Gruppe umfassend Silikatkeramiken und Metalloxidkeramiken und die poröse keramische Schale eine offene Porenstruktur mit Schwammcharakter aufweist, worin der Werkstoff des keramischen Formgrundkörpers eine Porosität von ≤ 10 Vol.-% aufweist worin der zahlenmittlere Porendurchmesser d₅₀ der porösen Schale 4 µm bis 6 µm beträgt, wobei die Schalendicke 0,1 mm bis 0,3 mm beträgt und wobei die mittlere Korngröße d_{50, Masse} der mineralischen Bestandteile des zur Herstellung des Formgrundkörpers verwendeten wässrigen Masseschlickers 0,5 µm bis 20 µm beträgt.

2. Keramischer Formkörper nach Anspruch 1, **dadurch gekennzeichnet, dass** sein Fe-Gehalt ≤ 1,5 Gew.-%, vorzugsweise ≤ 1,0 Gew.-% und/oder sein Gesamtgehalt an von Magnesium verschiedenen Erdalkalimetallen ≤ 2 Gew.-%, vorzugsweise ≤ 1 Gew.-% und/oder sein Ba-Gehalt ≤ 0,5 Gew.-%, vorzugsweise ≤ 0,05 Gew.-% ist.

3. Keramischer Formkörper nach einem der Ansprüche 1 oder 2, **dadurch gekennzeichnet, dass** der Werkstoff des keramischen Formgrundkörpers und der Werkstoff der porösen Schale in ihrer mineralischen Zusammensetzung übereinstimmen.

4. Keramischer Formkörper nach einem der Ansprüche 1 bis 3, **dadurch gekennzeichnet, dass** die poröse Schale eine Porosität von 20 bis 65 Vol.-%, vorzugsweise von 30 bis 40 Vol.-% aufweist.

5. Keramischer Formkörper nach einem der Ansprüche 1 bis 4, **dadurch gekennzeichnet, dass** die mittlere Korngröße d_{50, Masse} der mineralischen Bestandteile des zur Herstellung der porösen Schale verwendeten wässrigen Beschichtungsschlickers 0,5 µm bis 50 µm beträgt.

6. Keramischer Formkörper nach einem der Ansprüche 1 bis 5, **dadurch gekennzeichnet, dass** die keramischen Werkstoffe ausgewählt sind aus der Gruppe umfassend Steatit (Mg-Silikat), Aluminiumsilikat, Zirkonsilikat, Aluminiumoxid, Magnesiumoxid und Zirkonoxid.

7. Verfahren zur Herstellung eines keramischen Formkörpers mit einer porösen Schale nach den Ansprüchen 1 bis 8, **dadurch gekennzeichnet, dass** eine wässrige Grundsuspension (ein wässriger Masseschlicker) aus mineralischen Rohstoffen von Silikatkeramiken oder Oxidkeramiken und gegebenenfalls organischen Zusatzstoffen wie Bindemittel, Entschäumer, Konservierungsmittel und Stellmitttel angerührt und zu einem Sprühgranulat sprühgetrocknet wird, das Sprühgranulat in einer Form zu einem grünen Formgrundkörper, vorzugsweise trocken, gepresst wird, der grüne Formgrundkörper in Abhängigkeit von den mineralischen Rohstoffen bei Temperaturen im Bereich von 600 °C bis 1000 °C vorgeglüht wird, um alle organischen Bestandteile auszutreiben, wobei ein Formgrundkörpervorläufer resultiert, dass aus denselben oder anderen mineralischen Rohstoffen wie beim Masseschlicker sowie gegebenenfalls organischen Zusatzstoffen wie Bindemittel, Entschäumer, Konservierungsmittel und Stellmittel eine wässrige Beschichtungssuspension (ein wässriger Beschichtungsschlicker) angerührt wird, der zusätzlich ein organisches Porosierungsmittel zugesetzt wird, bevor mit ihr der Formgrundkörpervorläufer beschichtet, und nach der Beschichtung in Abhängigkeit von den mineralischen Rohstoffen bei Temperaturen von1250 °C bis 1400 °C zum keramischen Formkörper mit poröser keramischer Schale gesintert wird, wobei die Sinterzeit 0,5 bis 8 Stunden beträgt.

8. Verfahren nach Anspruch 7, **dadurch gekennzeichnet, dass** die Aufheizrate auf die Sintertemperatur 80 °C/h beträgt.

9. Verfahren nach Anspruch 7 oder 8, **dadurch gekennzeichnet, dass** die Beschichtung des Formgrundkörpervorläufers durch Tauchen im wässrigen Beschichtungsschlicker oder durch Aufsprühen des wässrigen Beschichtungsschlickers oder in einer Beschichtungstrommel erfolgt.

## Claims

1. Ceramic shaped body having a porous surface, **characterized in that** the ceramic shaped body consists of a main ceramic shaped body and a porous ceramic shell applied thereto, wherein the porous ceramic shell has been sintered together with the main ceramic body and the ceramic material of the main body and the ceramic material of the porous ceramic shell is selected from the group comprising silicate ceramics and metal oxide ceramics, and the porous ceramic shell has an open pore structure having sponge character, in which the material of the main ceramic shaped body has a porosity of ≤ 10% by volume, in which the number-average pore diameter d₅₀ of the porous shell is 4 µm to 6 µm, wherein the shell thickness is 0.1 mm to 0.3 mm and wherein the average grain size d_{50, body} of the mineral constituents of the aqueous body slip used for production of the main shaped body is 0.5 µm to 20 µm.

2. Ceramic shaped body according to Claim 1, **characterized in that** its Fe content is ≤ 1.5% by weight, preferably ≤ 1.0% by weight, and/or its total content of alkaline earth metals other than magnesium is ≤ 2% by weight, preferably ≤ 1% by weight, and/or its Ba content is ≤ 0.5% by weight, preferably ≤ 0.05% by weight.

3. Ceramic shaped body according to either of Claims 1 and 2, **characterized in that** the material of the main ceramic shaped body and the material of the porous shell have a corresponding mineral composition.

4. Ceramic shaped body according to any of Claims 1 to 3, **characterized in that** the porous shell has a porosity of 20% to 65% by volume, preferably 30% to 40% by volume.

5. Ceramic shaped body according to any of Claims 1 to 4, **characterized in that** the average grain size d_{50, body} of the mineral constituents of the aqueous coating slip used for production of the porous shell is 0.5 µm to 50 µm.

6. Ceramic shaped body according to any of Claims 1 to 5, **characterized in that** the ceramic materials are selected from the group comprising steatite (Mg silicate), aluminium silicate, zirconium silicate, aluminium oxide, magnesium oxide and zirconium oxide.

7. Process for producing a ceramic shaped body having a porous shell according to Claims 1 to 8, **characterized in that** an aqueous base suspension (an aqueous body slip) is made up from mineral raw materials of silicate ceramics or oxide ceramics and optionally organic additives such as binders, defoamers, preservatives and floating agents and spray-dried to form a spray-dried granular material, the spray-dried granular material is pressed in a mould, preferably in dry form, to form a green main shaped body, the green main shaped body, depending on the mineral raw materials, is subjected to preliminary calcining at temperatures in the range from 600°C to 1000°C, in order to drive out all organic constituents, resulting in a main shaped body precursor, **in that** the same or different mineral raw materials as for the body slip and optionally organic additives such as binders, defoamers, preservatives and floating agents are used to make up an aqueous coating suspension (an aqueous coating slip), to which an organic porosity agent is additionally added before it is used to coat the main shaped body precursor, and, after the coating, depending on the mineral raw materials, sintering is effected at temperatures of 1250°C to 1400°C to give the ceramic shaped body with a porous ceramic shell, the sintering time being 0.5 to 8 hours.

8. Process according to Claim 7, **characterized in that** the heating rate to the sintering temperature is 80°C/h.

9. Process according to Claim 7 or 8, **characterized in that** the main shaped body precursor is coated by dipping in the aqueous coating slip or by spray application of the aqueous coating slip or in a coating drum.

## Revendications

1. Corps moulé en céramique avec une surface poreuse, **caractérisé en ce que** le corps moulé en céramique est constitué d'un corps moulé de base en céramique et d'une coque céramique poreuse, appliquée sur le corps, la coque céramique poreuse étant frittée conjointement avec le corps moulé en céramique, et le matériau céramique du corps de base ainsi que le matériau céramique de la coque céramique poreuse étant choisis dans le groupe comprenant des céramiques silicatées et des céramiques à base d'oxydes métalliques, et la coque céramique poreuse présentant une structure de pores ouverts à caractère spongieux, le matériau du corps moulé de base en céramique présentant une porosité de ≤ 10 % en volume, le diamètre de pore moyen en nombre d₅₀ de la coque poreuse allant de 4 µm à 6 µm, l'épaisseur de coque allant de 0,1 mm à 0,3 mm, et la grosseur de grain moyenne d_{50, Masse} des constituants minéraux de la barbotine de masse aqueuse, utilisée pour la fabrication du corps moulé de base, étant comprise entre 0,5 µm et 20 µm.

2. Corps moulé en céramique selon la revendication 1, **caractérisé en ce que** sa teneur en Fe ≤ 1,5 % en poids, de préférence ≤ 1,0 % en poids, et/ou sa teneur totale en métaux alcalino-terreux, différents du magnésium, étant ≤ 2 % en poids, de préférence ≤ 1 % en poids, et/ou sa teneur en Ba ≤ 0,5 % en poids, de préférence ≤ à, 05 % en poids.

3. Corps moulé en céramique selon une des revendications 1 ou 2, **caractérisé en ce que** le matériau du corps moulé de base en céramique et le matériau de la coque poreuse ont la même composition minérale.

4. Corps moulé en céramique selon une des revendications 1 à 3, **caractérisé en ce que** la coque poreuse présente une porosité allant de 20 à 65 % en volume, de préférence de 30 à 40 % en volume.

5. Corps moulé en céramique selon une des revendications 1 à 4, **caractérisé en ce que** la grosseur de grain moyenne d_{50, Masse} des constituants minéraux de la barbotine de revêtement aqueuse, utilisée pour la fabrication de la coque poreuse, est comprise entre 0,5 µm et 50 µm.

6. Corps moulé en céramique selon une des revendications 1 à 5, **caractérisé en ce que** les matériaux céramiques sont choisis dans le groupe comprenant la stéatite (silicate de Mg), le silicate d'aluminium, le silicate de zirconium, l'oxyde d'aluminium, l'oxyde de magnésium et l'oxyde de zirconium.

7. Procédé de fabrication d'un corps moulé en céramique avec une coque poreuse selon une des revendications 1 à 8, **caractérisé en ce que** l'on réalise un mélange pour obtenir une suspension de base aqueuse (une barbotine de masse aqueuse), à partir de matières premières minérales de céramiques silicatées ou de céramiques oxydées et, le cas échéant, d'additifs organiques, tels que des liants, des agents antimousse, des conservateurs et des agents de fixation, et on la fait sécher par pulvérisation pour obtenir un granulat de pulvérisation, on comprime le granulat de pulvérisation dans un moule pour obtenir un corps moulé de base cru, de préférence sec, on soumet le corps moulé de base cru à un recuit à des températures comprises dans la plage allant de 600 °C à 1 000 °C, en fonction des matières premières minérales, afin d'expulser tous les constituants organiques, ce qui donne un précurseur de corps moulé de base, **en ce que** l'on mélange les mêmes matières premières minérales que pour la barbotine de masse ou des matières premières différentes, ainsi que, le cas échéant, des additifs organiques, tels que des liants, des agents antimousse, des conservateurs et des agents de fixation, pour obtenir une suspension de revêtement aqueuse (une barbotine de revêtement aqueuse) à laquelle on ajoute en plus un agent porosant organique, avant d'en revêtir le précurseur de corps moulé de base, et après l'application du revêtement, on effectue le frittage du précurseur, à des températures allant de 1 250 °C à 1 400 °C, en fonction des matières premières minérales, pour obtenir le corps moulé en céramique doté d'une coque céramique poreuse, le temps de frittage étant compris entre 0,5 et 8 heures.

8. Procédé selon la revendication 7, **caractérisé en ce que** le vitesse de chauffage pour atteindre la température de frittage est de 80 °C/h.

9. Procédé selon la revendication 7 ou 8, **caractérisé en ce que** l'application du revêtement sur le précurseur de corps moulé de base se fait par immersion dans la barbotine de revêtement aqueuse ou par pulvérisation de la barbotine de revêtement aqueuse, ou dans un tambour de revêtement.
